# EUROPEAN PATENT APPLICATION

(11) **EP 4 708 521 A1**
(43) Date of publication of application: **11.03.2026**
(21) Application number: 24864554.1
(22) Date of filing: 06.09.2024
(51) Int. Cl.: H01M 50/271

(54) **BATTERY CELL, BATTERY, AND ELECTRIC DEVICE**

(30) Priority: 13.09.2023 CN 202322489686 U
(71) Applicant: Contemporary Amperex Technology Co., Limited, Ningde, Fujian 352100 (CN)
(72) Inventor: WU, Kai, Ningde, Fujian 352100 (CN); LUO, Yan, Ningde, Fujian 352100 (CN); LIN, Denghua, Ningde, Fujian 352100 (CN); CAO, Mengkai, Ningde, Fujian 352100 (CN); WU, Yu, Ningde, Fujian 352100 (CN); JIANG, Xiangwei, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2024/117559
(87) International publication number: WO 2025/055834

(57) **Abstract**

A battery cell (20), a battery, and an electric apparatus are provided. The battery cell (20) includes: a housing (22), where the housing (22) forms an accommodating space; an electrode assembly (21), where the electrode assembly (21) is disposed within the accommodating space; a top cover (23), where the top cover (23) is connected to the housing (22) and covers the accommodating space, the top cover (23) is provided with a protrusion (231), the protrusion (231) is located within the accommodating space, and the protrusion (231) is configured to shield between the electrode assembly (21) and at least a portion of the connection at which the top cover (23) is connected to the housing (22). By providing the protrusion (231) on the top cover (23), cooperation between the protrusion (231) and the housing (22) can block laser or falling particles during welding, and prevent laser or particles from entering the accommodating space and thus causing damage to the electrode assembly (21).

## Description

### TECHNICAL FIELD

This application pertains to the field of battery technologies, and specifically relates to a battery cell, a battery, and an electric apparatus.

### BACKGROUND

In the battery, the primary component is the battery cell. The battery cell includes an electrode assembly, a housing, and a top cover. The housing forms an accommodating space, the electrode assembly is disposed within the accommodating space, and the top cover is welded to the housing to seal the accommodating space.

During the welding of the top cover to the housing, laser welding is typically employed. However, during the welding process, there may be instances of laser leakage or particles falling into the accommodating space, which could cause damage to the electrode assembly.

### SUMMARY

This application provides a battery cell, a battery, and an electric apparatus, capable of addressing the problem of laser leakage or particles falling into the accommodating space during the welding process of the battery cell, which could cause damage to the electrode assembly.

To address the above technical problem, a technical solution adopted by this application is: providing a battery cell, where the battery cell includes: a housing, where the housing forms an accommodating space; an electrode assembly, where the electrode assembly is disposed within the accommodating space; and a top cover, where the top cover is connected to the housing and covers the accommodating space, the top cover is provided with a protrusion, the protrusion is located within the accommodating space, and the protrusion is configured to shield between the electrode assembly and at least a portion of the connection at which the top cover is connected to the housing.

By providing the protrusion on the top cover, cooperation between the protrusion and the housing can block laser or falling particles during welding, and prevent laser or particles from entering the accommodating space and thus causing damage to the electrode assembly.

In some embodiments, the housing includes a bottom wall and side walls, the side walls extend from an edge of the bottom wall, the bottom wall and the side walls enclose the accommodating space, the top cover is connected to ends of the side walls away from the bottom wall, and the protrusion is spaced apart from or abuts against surfaces of the side walls forming the accommodating space.

The protrusion is spaced apart from or abuts against the side walls of the housing, which can better prevent laser or particles from entering the accommodating space and thus causing damage to the electrode assembly.

In some embodiments, the protrusion is spaced apart from the surfaces of the side walls forming the accommodating space by a spacing not greater than 0.1 millimeter.

The protrusion is spaced apart from the side walls, which avoids rubbing against the side wall, preventing wear, and the spacing between the protrusion and the side wall is not greater than 0.1 millimeter, which can effectively prevent laser or particles from entering the accommodating space and thus causing damage to the electrode assembly.

In some embodiments, a flange is provided on a side of the side wall away from the bottom wall, and the top cover is connected to the flange.

The provision of the flange allows the welding position of the housing and the top cover to be kept away from the accommodating space, thereby reducing the probability of laser or particles entering the accommodating space.

In some embodiments, a shortest distance from the protrusion to an edge of the top cover is not less than the sum of a width of the flange and a thickness of the side wall.

This arrangement ensures that the protrusion corresponds to the accommodating space and does not interfere with the side wall during installation.

In some embodiments, the protrusion is formed with a first fillet and a second fillet, the first fillet being an inner corner of the protrusion, the second fillet being an outer corner of the protrusion, and a radius of the first fillet is not less than a difference between a radius of the second fillet and a thickness of the protrusion.

The provision of fillets makes the bent portions of the protrusion smoother and prevents interference between the protrusion and the housing.

In some embodiments, the top cover is formed with a third fillet, and the radius of the second fillet is not less than a difference between a radius of the third fillet and the shortest distance from the protrusion to the edge of the top cover.

This arrangement enables a smooth transition at the edge of the top cover similar to the protrusion and allows the shape of the top cover edge to be similar to that of the protrusion.

In some embodiments, the protrusion is perpendicular to the top cover.

This arrangement ensures the structural stability of the protrusion and minimizes a projected area of the protrusion, making it easier to avoid the electrode assembly within the accommodating space.

In some embodiments, a tab is provided on one side of the electrode assembly, the tab faces one of the side walls, and the protrusion is spaced apart from or abuts against the surface of the side wall not faced by the tab and forming the accommodating space.

Providing the protrusion on the sides of the top cover not corresponding to the tab can better block laser or falling particles during welding of a plurality of sides of the housing to the top cover.

In some embodiments, the protrusion is a continuous structure, and a projection of the protrusion on the top cover surrounds a projection of the electrode assembly on the top cover.

The continuous arrangement of the protrusion enables comprehensive protection of the electrode assembly, better blocking laser or falling particles during welding of the housing to the top cover.

In some embodiments, a cross section of the protrusion in a direction perpendicular to the top cover is rectangular.

The rectangular structure ensures a consistent distance between the protrusion and the side wall, better blocking the entry of particles, and even if laser reflection occurs, it will reflect between the side wall of the housing and the protrusion, effectively blocking laser or falling particles during welding of the housing to the top cover.

In some embodiments, the top cover is connected to the housing by welding, and the protrusion is configured to shield between the electrode assembly and at least a portion of a weld seam between the top cover and the housing.

The welding method ensures a highly secure connection between the top cover and the housing and can provide a sealing effect.

In some embodiments, the protrusion is provided on a first surface of the top cover, a second surface of the top cover is planar, and the second surface and the first surface are surfaces of the top cover facing away from each other.

This arrangement ensures that the overall surface of the battery cell is smooth, making it more suitable for assembly with other components or battery cells.

To address the above technical problem, another technical solution adopted by this application is: providing a battery, where the battery includes the battery cell described in any one of the above.

Through the above arrangement, the battery cell in the battery is provided with a protrusion on the top cover, which, in cooperation with the housing, can block laser or falling particles during welding, preventing laser or particles from entering the accommodating space and thus causing damage to the electrode assembly.

To address the above technical problem, yet another technical solution adopted by this application is: providing an electric apparatus, where the electric apparatus includes the battery described above, and the battery is configured to store and/or supply electricity for the electric apparatus.

Through the above arrangement, the battery cell in the battery is provided with a protrusion on the top cover, which, in cooperation with the housing, can block laser or falling particles during welding, preventing laser or particles from entering the accommodating space and thus causing damage to the electrode assembly.

The structure, other objectives, and beneficial effects of this application will be described in detail with reference to the accompanying drawings to ensure a clearer and more understandable description of the preferred embodiments.

### BRIEF DESCRIPTION OF DRAWINGS

To more clearly illustrate the technical solutions in the embodiments of this application or in the prior art, the accompanying drawings required for describing the embodiments or the prior art are briefly introduced below. It is apparent that the accompanying drawings described below are some embodiments of this application, and those of ordinary skill in the art can obtain other drawings based on these drawings without creative efforts.
FIG. 1 is a schematic structural diagram of a vehicle according to one or more embodiments;
FIG. 2 is a schematic exploded structural diagram of a battery according to one or more embodiments;
FIG. 3 is a schematic perspective structural diagram of a battery cell according to some embodiments;
FIG. 4 is a schematic exploded structural view of a battery cell according to some embodiments;
FIG. 5 is a schematic partial bottom view of a top cover according to some embodiments;
FIG. 6 is a schematic enlarged structural diagram of part B in FIG. 5;
FIG. 7 is a schematic top view of a battery cell according to some embodiments;
FIG. 8 is a schematic cross-sectional structural diagram of the battery cell along section A-A in FIG. 7;
FIG. 9 is a schematic enlarged structural diagram of region C of the battery cell in FIG. 8;
FIG. 10 is a schematic bottom view of a top cover according to some other embodiments; and
FIG. 11 is a schematic bottom view of a top cover according to yet some other embodiments.

### Reference signs in the accompanying drawings are:

1000: vehicle; 200: controller; 300: motor; 100: battery; 10: casing; 11: first portion; 12: second portion; 20: battery cell; 21: electrode assembly; 22: housing; 221: bottom wall; 222: side wall; 223: flange; 23: top cover; and 231: protrusion.

### DESCRIPTION OF EMBODIMENTS

To make the objectives, technical solutions, and advantages of this application clearer, the technical solutions in the embodiments of this application will be described clearly and completely with reference to the accompanying drawings showing a plurality of embodiments of this application. It should be understood that the described embodiments are only some, not all, embodiments of this application. Based on the embodiments described in this application, all other embodiments obtained by those of ordinary skill in the art without creative efforts shall fall within the protection scope of this application.

Unless otherwise defined, all technical and scientific terms used in this application have the same meanings as commonly understood by those skilled in the technical field of this application; the terms used in the specification of this application are for the purpose of describing specific embodiments only and are not intended to limit this application; the terms "include," "comprise," "have," "having," "contain," and the like in the specification, claims, and the above drawings of this application are open-ended terms. Therefore, a method or device that "includes," "comprises," or "has," for example, one or more steps or elements, has those one or more steps or elements but is not limited to having only those one or more elements. The terms "first," "second," and the like in the specification, claims, or the above drawings of this application are used to distinguish different objects, not to describe a specific order or priority. Furthermore, the terms "first" and "second" are used for descriptive purposes only and cannot be understood as indicating or implying relative importance or implicitly indicating the number of technical features indicated. Thus, a feature defined by "first" or "second" may explicitly or implicitly include one or more of such features. In the description of this application, unless otherwise specified, "a plurality of" means two or more.

In the description of this application, it should be understood that terms indicating orientation or positional relationships, such as "center," "lateral," "length," "width," "upper," "lower," "front," "rear," "left," "right," "vertical," "horizontal," "top," "bottom," "inner," "outer," "axial," "radial," "circumferential," and the like, are based on the orientation or positional relationships shown in the accompanying drawings and are only for the convenience of describing this application and simplifying the description, rather than indicating or implying that the referred device or element must have a specific orientation, be constructed, and operate in a specific orientation, and thus cannot be understood as limiting this application.

In the description of this application, it should be noted that, unless otherwise explicitly specified and limited, the terms "installation," "connection," "jointing," "attachment" should be understood broadly; for example, it may be a fixed connection, a detachable connection, or an integral connection; or it may be a direct connection, an indirect connection through an intermediary, or an internal communication between two elements. Those of ordinary skill in the art can understand the specific meanings of the above terms in this application based on specific circumstances.

Reference to an "embodiment" in this application means that a specific feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described in this application can be combined with other embodiments.

As mentioned above, it should be emphasized that when the term "include/comprise" is used in this specification, it is used to clearly indicate the presence of the stated feature, integer, step, or component but does not preclude the presence or addition of one or more other features, integers, steps, components, or groups thereof. As used in this application, the singular forms "a," "an," and "the" also include plural forms unless the context clearly indicates otherwise.

The term "about" generally means the stated value plus or minus 10%, or more specifically, plus or minus 5%. The term "or" used in the claims, unless explicitly indicating that it refers only to an alternative, means "and/or."

The term "and/or" in this application is merely an association describing related objects, indicating that three relationships may exist; for example, A and/or B may indicate: A alone, both A and B, or B alone. Additionally, the character "/" in this application generally indicates an "or" relationship between the associated objects before and after.

An existing battery cell includes an electrode assembly, a housing, and a top cover. The housing forms an accommodating space, the electrode assembly is disposed within the accommodating space, and the top cover is welded to the housing to seal the accommodating space. During the welding of the top cover to the housing, laser welding is typically employed. However, during laser welding, the laser is easy to leak into the accommodating space, causing damage to the electrode assembly. Additionally, since the position of welding the housing and the top cover is generally at or in close proximity to the edge of the accommodating space, particles may also be likely to enter the accommodating space, causing damage to the electrode assembly in the accommodating space during the use of the battery cell.

To address the issue of laser leakage or particles falling into the accommodating space during welding of the battery cell, which may cause damage to the electrode assembly, this application proposes a battery cell, a battery, and an electric apparatus. The instance of laser leakage or falling particles during welding of the battery cell is due to the proximity of the welding position to the accommodating space and the lack of a barrier between the welding position and the electrode assembly in the accommodating space. By providing a protrusion on the top cover, a barrier is formed between the welding position and the electrode assembly. The protrusion shields to prevent laser leakage or falling particles from entering the accommodating space.

The following embodiments, for ease of explanation, take a vehicle as an example of an electric apparatus in one embodiment of this application.

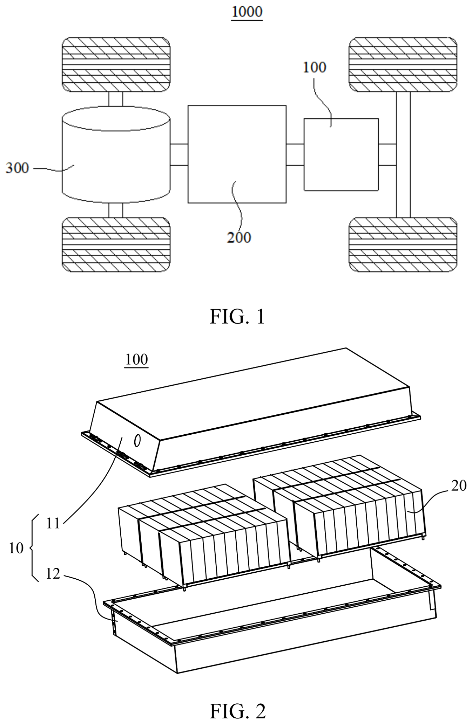

Referring to FIG. 1, FIG. 1 is a schematic structural diagram of a vehicle according to one or more embodiments.

The vehicle 1000 may be a fuel vehicle, a gas vehicle, or a new energy vehicle, and the new energy vehicle may be a battery electric vehicle, a hybrid electric vehicle, or an extended-range electric vehicle. A battery 100 is provided inside the vehicle 1000, and the battery 100 may be disposed at the bottom, front, or rear of the vehicle 1000. The battery 100 may be used for supplying power for the vehicle 1000; for example, the battery 100 may serve as an operational power source for the vehicle 1000. The vehicle 1000 may further include a controller 200 and a motor 300, where the controller 200 is configured to control the battery 100 to supply power to the motor 300, for example, for the operational power requirements during starting, navigation, and driving of the vehicle 1000.

In some embodiments of this application, the battery 100 may not only serve as an operational power source for the vehicle 1000 but also as a driving power source for the vehicle 1000, replacing or partially replacing fuel or natural gas to provide driving power for the vehicle 1000.

To improve the performance of the electric apparatus, this application further provides a battery 100, as shown in FIG. 2. FIG. 2 is a schematic exploded structural diagram of a battery according to one or more embodiments. The shape of the battery 100 includes, but is not limited to, a rectangular shape. In other embodiments, the shape of the battery 100 may also be cylindrical, square, or any other shape.

In some embodiments, the battery 100 may include a casing 10 and a battery cell 20, where the battery cell 20 is accommodated within the casing 10. The casing 10 is configured to provide an accommodating space for the battery cell 20, and the casing 10 may adopt various structures. In some embodiments, the casing 10 may include a first portion 11 and a second portion 12, where the first portion 11 and the second portion 12 are mutually covered, and the first portion 11 and the second portion 12 together define the accommodating space for accommodating the battery cell 20. The second portion 12 may be a hollow structure with an opening at one end, and the first portion 11 may be a plate-like structure, where the first portion 11 covers the opening side of the second portion 12, so that the first portion 11 and the second portion 12 together define the accommodating space; alternatively, both the first portion 11 and the second portion 12 may be hollow structures with an opening on one side, and the opening side of the first portion 11 covers the opening side of the second portion 12. Certainly, the casing 10 formed by the first portion 11 and the second portion 12 may have various shapes, such as a cylinder or a cuboid.

In the battery 100, there may be a plurality of battery cells 20, and the plurality of battery cells 20 may be connected in series, in parallel, or in a mixed configuration, where the mixed configuration refers to a combination of series and parallel connections among the plurality of battery cells 20. The plurality of battery cells 20 may be directly connected in series, in parallel, or in a mixed configuration, and the entirety formed by the plurality of battery cells 20 is accommodated within the casing 10; alternatively, the battery 100 may include a plurality of battery cells 20 first connected in series, in parallel, or in a mixed configuration to form a battery module, and a plurality of battery modules are then connected in series, in parallel, or in a mixed configuration to form an entirety, which is accommodated within the casing 10. The battery 100 may also include other structures, for example, the battery 100 may include a busbar component for achieving electrical connection between the plurality of battery cells 20.

Each battery cell 20 may be a secondary battery or a primary battery; or may be a lithium-sulfur battery, a sodium-ion battery, or a magnesium-ion battery, but is not limited thereto. The battery cell 20 may be in the shape of a cylinder, a flat body, or a cuboid.

The manufacturing methods of the battery 100 include lamination and winding, meaning the batteries 100 are classified into laminated batteries and wound batteries. Laminated batteries have uniform current collection, low internal resistance, and high specific power, but they require extremely high mold precision, high equipment investment, complex processes, and low production efficiency. Wound batteries are simple to manufacture, and have moderate equipment precision requirements for electrode plate production and assembly, high production efficiency, and low cost. In terms of performance, wound batteries have excellent high- and low-temperature performance, fast charging, long lifespan, stable high output voltage, robust structure, and strong vibration resistance.

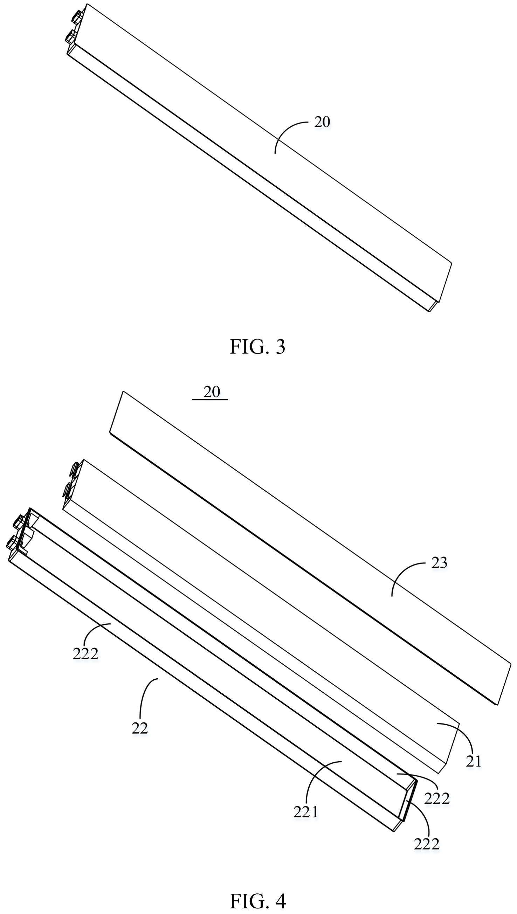

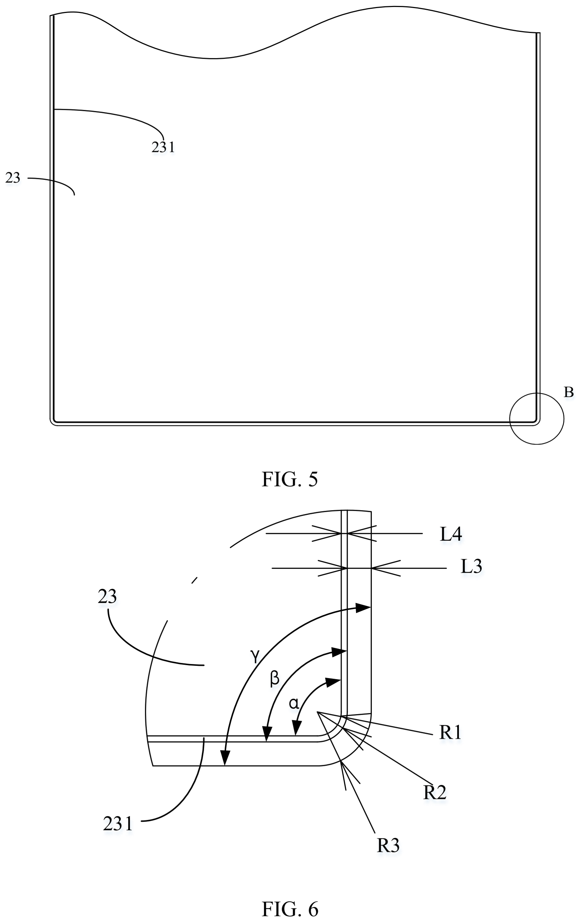

As shown in FIGs. 3 to 6, FIG. 3 is a schematic perspective structural diagram of a battery cell according to some embodiments, FIG. 4 is a schematic exploded structural view of a battery cell according to some embodiments, FIG. 5 is a schematic partial bottom view of a top cover 23 according to some embodiments, and FIG. 6 is a schematic enlarged structural diagram of part B in FIG. 5. In some embodiments, the battery cell 20 includes a housing 22, an electrode assembly 21, and a top cover 23. The housing 22 forms an accommodating space, and the electrode assembly 21 is disposed within the accommodating space. The top cover 23 is connected to the housing 22 and covers the accommodating space. The top cover 23 is provided with a protrusion 231, the protrusion 231 is located within the accommodating space, and the protrusion 231 is configured to shield between the electrode assembly 21 and at least a portion of the connection at which the top cover 23 is connected to the housing 22.

The electrode assembly 21 is a component in the battery cell 20 where electrochemical reactions occur. The housing 22 is a component used to form the internal environment of the battery cell 20. The internal environment formed by the housing 22 can accommodate the electrode assembly 21, electrolyte, and other components. The housing 22 may include one or more electrode assemblies 21, with no limitation on the number. The housing 22 has an opening formed to allow the electrode assembly 21 to be placed into the accommodating space through the opening. The top cover 23 covers the opening and cooperates with the housing 22 to seal the accommodating space accommodating the electrode assembly 21. The top cover 23 is a plate-like structure, with a shape corresponding to the shape of the housing 22. An edge of the top cover 23 is connected to an edge of the housing 22, thereby cooperating with the housing 22 to seal the accommodating space containing the electrode assembly 21. In some embodiments, the top cover 23 is connected to the housing 22 by laser welding. The protrusion 231 is formed by a surface of the housing 22 facing the accommodating space and extends into the accommodating space, so the protrusion 231 is located within the accommodating space. Only when the protrusion 231 is located within the accommodating space can it correspond to a gap at the connection between the top cover 23 and the housing 22, thereby blocking laser or falling particles during welding of the top cover 23 to the housing 22. The connection at which the top cover 23 is connected to the housing 22 is a connection position of the top cover 23 and the housing 22. The protrusion 231 is configured to shield between the electrode assembly 21 and at least a portion of the connection at which the top cover 23 is connected to the housing 22, so that at least the portion of the connection between the top cover 23 and the housing 22 is shielded from the electrode assembly 21 by the protrusion 231. This prevents light from at least the portion of the connection between the top cover 23 and the housing 22 from directly irradiating the electrode assembly 21. Particles generated at least the portion of the connection between the top cover 23 and the housing 22 are also blocked by the protrusion 231 in cooperation with the housing, preventing them from falling onto the electrode assembly 21. A projection of the protrusion 231 on the top cover 23 is spaced apart from a projection of the electrode assembly 21 on the top cover 23, so that the protrusion 231 can surround the electrode assembly 21, positioned between the connection position of the top cover 23 and the housing 22 and the electrode assembly 21. The housing 22 may have various shapes and sizes, including but not limited to cuboid, cylindrical, and hexagonal prism. The shape of the housing 22 may be determined based on the specific shape and size of the electrode assembly 21. The material of the housing 22 may be various, including but not limited to copper, iron, aluminum, stainless steel, aluminum alloy, and plastic. The size and shape of the top cover 23 are adapted to the size and shape of the housing 22.

By providing the protrusion 231 on the top cover 23, cooperation between the protrusion 231 and the housing 22 can block laser or falling particles during welding of the top cover 23 to the housing 22, and prevent laser or particles from entering the accommodating space and thus causing damage to the electrode assembly 21, thereby protecting the electrode assembly 21.

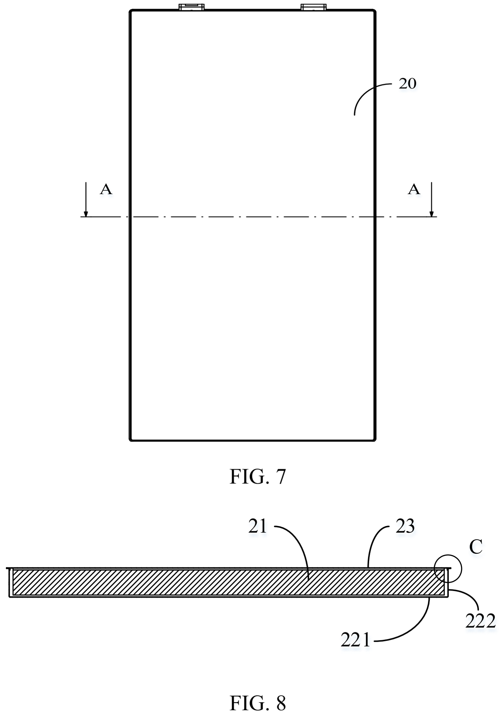

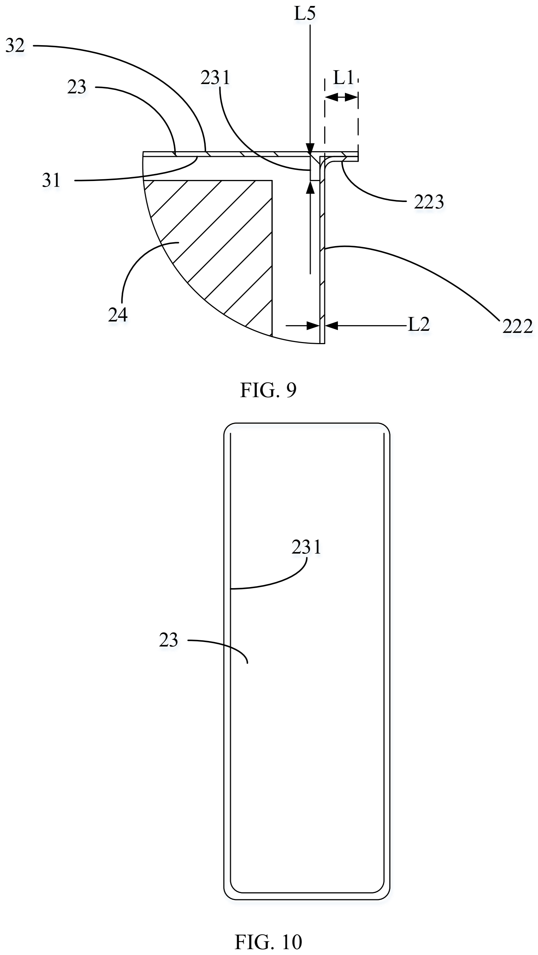

Further, as shown in FIGs. 7 to 9, FIG. 7 is a schematic top view of a battery cell according to some embodiments, FIG. 8 is a schematic cross-sectional structural diagram of the battery cell along section A-A in FIG. 7, and FIG. 9 is a schematic enlarged structural diagram of region C of the battery cell in FIG. 8. In some embodiments, the housing 22 includes a bottom wall 221 and side walls 222. The side walls 222 extend from an edge of the bottom wall 221, and the bottom wall 221 and the side walls 222 enclose an accommodating space with an opening. The top cover 23 is connected to ends of the side walls 222 away from the bottom wall 221, and the protrusion 231 is spaced apart from or abuts against surfaces of the side walls 222 forming the accommodating space.

The bottom wall 221 of the housing 22 is disposed opposite the top cover 23, and the side walls 222 are arranged around the edge of the bottom wall 221. The side wall 222 is configured to connect the bottom wall 221 and the top cover 23. The bottom wall 221 and the side walls 222 may be an integrally formed structure made of the same material. In some embodiments, a projection of the bottom wall 221 on the top cover 23 covers the projection of the protrusion 231 on the top cover 23, and an edge of the projection of the bottom wall 221 on the top cover 23 is spaced apart from an edge of the top cover 23. In some embodiments, the side wall 222 may be perpendicular to the bottom wall 221 and the top cover 23. The surface of the side wall 222 forming the accommodating space is the inner surface of the side wall 222, that is, the surface of the side wall 222 facing the electrode assembly 21.

The protrusion 231 is spaced apart from or abuts against the side wall 222 of the housing 22, which can better prevent laser or particles from entering the accommodating space and thus causing damage to the electrode assembly 21.

In some embodiments, the protrusion 231 is spaced apart from the surface of the side wall 222 forming the accommodating space by a spacing not greater than 0.1 millimeter.

The protrusion 231 is spaced apart from the surface of the side wall 222 forming the accommodating space, meaning that the protrusion 231 is spaced apart from the side wall 222. If the spacing between the protrusion 231 and the side wall 222 is relatively large, it will weaken the effectiveness of the protrusion 231 in blocking laser or particles from entering the accommodating space and thus affecting the electrode assembly 21. Therefore, when the protrusion 231 is spaced apart from the side wall 222, the spacing should not be greater than 0.1 millimeter.

The protrusion 231 is spaced apart from the side wall 222, which avoids rubbing against the side wall 222, preventing wear, and the spacing between the protrusion 231 and the side wall 222 is not greater than 0.1 millimeter, which can effectively prevent laser or particles from entering the accommodating space and thus causing damage to the electrode assembly 21.

In some embodiments, a flange 223 is provided on a side of the side wall 222 away from the bottom wall 221, and the top cover 23 is connected to the flange 223.

The flange 223 is a structure formed by the side wall 222 extending in a direction away from the electrode assembly 21. The flange 223 is arranged parallel to the top cover 23, and the top cover 23 abuts against the flange 223. Additionally, the edge of the top cover 23 is connected to the edge of the flange 223 away from the side wall 222. This connection may be welding, such as laser welding. This arrangement allows the welding position of the top cover 23 and the flange 223 to be spaced from the accommodating space, allowing the welding position to be kept away from the accommodating space instead of being directly welded at the edge of the accommodating space. The connections between the side wall 222 and the bottom wall 221, and between the side wall 222 and the flange 223, may be through chamfers. The chamfer may be a bevel, a fillet, or an arc-shaped corner.

The provision of the flange 223 allows the position of welding the housing 22 and the top cover 23 to be kept away from the accommodating space, thereby reducing the probability of laser or particles entering the accommodating space.

In some embodiments, a shortest distance L3 from the protrusion 231 to the edge of the top cover 23 is not less than the sum of the width L1 of the flange 223 and the thickness L2 of the side wall 222.

A width L1 of the flange 223 is a minimum length of the flange 223 in the direction from the position connected to the side wall 222 to the direction away from the side wall 222, and a thickness L2 of the side wall 222 is a minimum length between the inner side 222 of the side wall 222 facing the electrode assembly 21 and the outer side of the side wall 222 away from the electrode assembly 21. During manufacturing of the protrusion 231 on the top cover 23, the position of the protrusion 231 can be set considering the width L1 of the flange 223 and the thickness L2 of the side wall 222. When the flange 223 is connected to the side wall 222 through a chamfer, the chamfer portion should also be considered and calculated as part of the flange 223.

This arrangement ensures that the protrusion 231 corresponds to the accommodating space and does not interfere with the side wall 222 during installation.

In some embodiments, the protrusion 231 is formed with a first fillet α and a second fillet β, the first fillet α being an inner corner of the protrusion 231, the second fillet β being an outer corner of the protrusion 231, and a radius R1 of the first fillet α is not less than a difference between a radius R2 of the second fillet β and a thickness L4 of the protrusion 231.

The protrusion 231 is a rectangular frame structure, forming fillet structures at its four corners. As the protrusion 231 has a certain thickness L4, the protrusion 231 forms an inner corner and an outer corner at each corner. The first fillet α is the inner corner of the protrusion 231, with a relatively small radius R1. The second fillet β is the outer corner of the protrusion 231, with a relatively large radius R2. In some embodiments, the protrusion 231 may be another polygonal frame structure, forming an inner first fillet α and an outer second fillet β at each corner.

The provision of fillets can make the bent portions of the protrusion 231 smoother and can prevent interference between the protrusion 231 and the housing 22.

In some embodiments, the top cover 23 is formed with a third fillet γ, and the radius R2 of the second fillet β is not less than a difference between a radius R3 of the third fillet γ and the shortest distance L3 from the protrusion 231 to the edge of the top cover 23.

The top cover 23 is also a rectangular structure, forming a third fillet γ at four corners of the top cover 23. A shortest distance L3 from the protrusion 231 to the edge of the top cover 23 is a shortest length between the outer edge of the protrusion 231 and the edge of the top cover 23.

This arrangement enables a smooth transition at the edge of the top cover 23 similar to the protrusion 231 and allows the shape of the top cover 23 edge to be similar to that of the protrusion 231.

In some embodiments, the protrusion 231 is perpendicular to the top cover 23.

If the protrusion 231 is inclined, it will be inclined within the accommodating space. Since the accommodating space contains the electrode assembly 21, the protrusion 231 needs to avoid the electrode assembly 21, and an inclined arrangement would occupy a larger space in the accommodating space, making it difficult to avoid the electrode assembly 21. The protrusion 231 is perpendicular to the top cover 23, and the top cover 23 covers the opening of the accommodating space, meaning that the protrusion 231 is vertically arranged within the accommodating space. This arrangement avoids inclination, making it easier to avoid the electrode assembly 21. The perpendicular arrangement also reduces the probability of the protrusion 231 rubbing against or colliding with the side wall 222, thereby ensuring the structural stability of the protrusion 231.

This arrangement ensures the structural stability of the protrusion 231 and minimizes a projected area of the protrusion 231, making it easier to avoid the electrode assembly 21 within the accommodating space.

In some embodiments, a height L5 of the protrusion 231 is not greater than 0.5 millimeter.

The height L5 of the protrusion 231 is a length of the protrusion 231 in the direction perpendicular to the top cover 23 to the bottom wall 221. If the height L5 of the protrusion 231 is too high, the protrusion 231 may easily occupy the space of other components, so limiting the height L5 effectively prevents it from occupying the space of other components. Additionally, structures such as a bottom support plate or lower plastic may be provided between the electrode assembly 21 and the side wall 222, and if the height L5 of the protrusion 231 is too high, the protrusion 231 may interfere with the bottom support plate, lower plastic, or other structures. Moreover, if the height L5 of the protrusion 231 is too high, for example, equal to the height of the side wall 222, the volume of the housing 22 needs to be increased to allow other components to be arranged normally. The height L5 of the protrusion 231 may be 0.5 millimeter, or 0.4 millimeter, 0.3 millimeter, 0.2 millimeter, or 0.1 millimeter, and can be adjusted according to the specific size of the housing 22.

This arrangement prevents the protrusion 231 from occupying excessive accommodating space.

In some embodiments, the thickness L4 of the protrusion 231 is not greater than 0.5 millimeter.

If the thickness L4 of the protrusion 231 is too large, the protrusion 231 may cause squeezing or collision with the electrode assembly 21, thereby damaging the electrode assembly 21. Therefore, the thickness L4 of the protrusion 231 needs to be limited. The thickness L4 of the protrusion 231 may be 0.5 millimeter, or 0.4 millimeter, 0.3 millimeter, 0.2 millimeter, or 0.1 millimeter, and can be adjusted according to the specific size of the housing 22.

The protrusion 231 only needs to block laser or particles from entering the accommodating space, so it requires a large thickness L4. This arrangement can simplify the protrusion 231, reduces material, and prevents the protrusion 231 from occupying excessive accommodating space.

As shown in FIG. 10, FIG. 10 is a schematic bottom view of a top cover according to some other embodiments. In some embodiments, a tab is provided on one side of the electrode assembly 21, the tab faces one of the side walls 222, and the protrusion 231 is spaced apart from or abuts against the surface of the side wall 222 not faced by the tab and forming the accommodating space.

The tab is a part of the electrode assembly 21, the tab is connected to components such as a terminal post to form the positive and negative electrodes of the battery cell 20. The components such as the terminal post are disposed on the side wall 222 of the housing 22 or on at least one side of the top cover 23, so the tab faces at least one of the side walls 222 of the housing 22. When the housing 22 is rectangular, it includes four side walls 222. The tab faces one of the side walls 222, and the other three side walls 222 are side walls not faced by the tab. The protrusion 231 is spaced apart from or abuts against the surface of the side walls 222 not faced by the tab and forming the accommodating space, meaning that the protrusion 231 corresponds to three side walls 222 of the housing, so the projection of the protrusion 231 on the top cover 23 is U-shaped. When the housing 22 has another shape, the projection of the protrusion 231 on the top cover 23 may have another shape, where the another shape has at least one opening. For example, the projection of the protrusion 231 on the top cover 23 has one opening, and this opening corresponds to the position of the projection of the tab on the top cover 23, meaning that a distance between the projection position of the tab on the top cover 23 and the opening is less than the distance between the projection of the tab on the top cover 23 and the projection of the protrusion 231 on the top cover 23.

Through the above arrangement, providing the protrusion 231 on the sides of the top cover 23 not corresponding to the tab can better block laser or falling particles during welding of a plurality of sides of the housing 22 to the top cover 23.

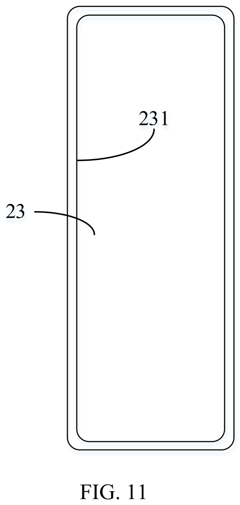

As shown in FIG. 11, FIG. 11 is a schematic bottom view of a top cover according to yet some other embodiments. The protrusion 231 is a continuous structure, and the projection of the protrusion 231 on the top cover 23 surrounds the projection of the electrode assembly 21 on the top cover 23.

In some embodiments, the protrusion 231 is a continuous structure, and may be a rectangular structure, a square structure, a parallelogram structure, or another polygonal structure. The continuous structure is a structure connected end-to-end without forming an opening.

The continuous arrangement of the protrusion 231 enables comprehensive protection of the electrode assembly 21, better blocking laser or falling particles during welding of the housing 22 to the top cover 23.

In some embodiments, a cross-section of the protrusion 231 in a direction perpendicular to the top cover 23 is rectangular.

As shown in FIGs. 8 and 9, the cross-sectional direction in FIG. 8 is the cross section along the direction perpendicular to the top cover 23. The cross-section of the protrusion 231 in FIG. 9 is rectangular. This means that the thickness of the protrusion 231 is constant, not gradually varying. When the top cover 23 is welded to the housing 22, if the laser leaks into the accommodating space, it will be blocked by the protrusion 231. When the protrusion 231 is spaced apart from the side wall 222, the laser, after irradiating the protrusion 231, will be reflected to the side wall 222 of the housing 22, and depending on the angle, it will generally reflect back and forth between the protrusion 231 and the side wall 222. After a plurality of reflections, the laser will be attenuated, so even if it reaches the electrode assembly 21, it is unlikely to affect the electrode assembly 21. Additionally, the rectangular design makes the surface of the protrusion 231 facing the side wall 222 parallel to the surface of the side wall 222 facing the electrode assembly 21, facilitating better assembly. Moreover, when the protrusion 231 is spaced apart from the side wall 222, the distance between the protrusion 231 and the side wall 222 remains consistent, not varying, enabling more stable blocking of falling particles.

The rectangular structure ensures a consistent distance between the protrusion and the side wall, better blocking the entry of particles, and even if laser reflection occurs, it will reflect between the side wall of the housing and the protrusion, effectively blocking laser or falling particles during welding of the housing to the top cover.

In some embodiments, the top cover 23 is connected to the housing 22 by welding, and the protrusion 231 is configured to shield between the electrode assembly 21 and at least a portion of a weld seam between the top cover 23 and the housing 22.

The weld seam is a position at which the top cover 23 and the housing 22 are welded, fusing the top cover 23 and the housing 22 into one at the weld seam. The welding method may be, for example, laser welding.

The welding method ensures a highly secure connection between the top cover 23 and the housing 22 and can provide a sealing effect.

As shown in FIG. 9, in some embodiments, the protrusion 231 is provided on a first surface 31 of the top cover 23, a second surface 32 of the top cover 23 is planar, and the second surface 32 and the first surface 31 are surfaces of the top cover 23 facing away from each other.

The first surface 31 of the top cover 23 is a surface of the top cover 23 connected to the housing 22, also a surface of the top cover 23 facing the housing 22 or the electrode assembly 21, with a portion of the first surface 31 enclosing the accommodating space. The second surface 32 of the top cover 23 is a surface of the top cover 23 facing away from the housing 22 or the electrode assembly 21, opposite the first surface 31, and thus the two are surfaces facing away from each other. In FIG. 9, the surface of the top cover 23 facing downward is the first surface 31, and the surface facing upward is the second surface 32.

This arrangement ensures that the overall surface of the battery cell is smooth, making it more suitable for assembly with other components or battery cells.

This application further provides a battery and an electric apparatus. The battery includes the battery cell 20 described in any one of the above. The electric apparatus includes the battery described above, and the battery is configured to store and/or supply electricity for the electric apparatus.

The battery may be a primary battery, a secondary battery, an energy storage battery, an energy storage apparatus, or the like. The energy storage battery is a battery for storing and releasing electrical energy. The electric apparatus may include, but is not limited to, mobile phones, tablets, computers, electric toys, electric tools, electric bicycles, electric vehicles, ships, and spacecraft. Electric toys may include fixed or mobile electric toys, such as game consoles, electric car toys, electric ship toys, and electric airplane toys, and spacecraft may include airplanes, rockets, space shuttles, and spaceships. The energy storage apparatus is an apparatus used in homes, businesses, or industries for storing and/or releasing electrical energy. For example, the energy storage apparatus may be used in a power grid system to store electrical energy when the grid supply exceeds demand and release electrical energy when the grid supply is less than demand. The electric apparatus may include a battery, and the electric apparatus may provide electrical energy through the battery to achieve corresponding functions of the electric apparatus.

Through the above arrangement, the battery cell 20 in the battery is provided with a protrusion 231 on the top cover 23, which, in cooperation with the housing 22, can block laser or falling particles during welding, preventing laser or particles from entering the accommodating space and thus causing damage to the electrode assembly 21.

In some specific application scenarios, to address the problem of laser leakage or particles falling into the accommodating space during welding of existing battery cells, which may cause damage to the electrode assembly, the battery cell of this application includes a housing 22, an electrode assembly 21, and a top cover 23. The housing 22 forms an accommodating space, and the electrode assembly 21 is disposed within the accommodating space. The top cover 23 is connected to the housing 22 and covers the accommodating space. The top cover 23 is provided with a protrusion 231, the protrusion 231 is located within the accommodating space, and the protrusion 231 is configured to shield between the electrode assembly 21 and at least a portion of the connection at which the top cover 23 is connected to the housing 22. The housing 22 includes a bottom wall 221 and side walls 222. The side walls 222 extend from an edge of the bottom wall 221, and the bottom wall 221 and the side walls 222 enclose an accommodating space with an opening. The top cover 23 is connected to an end of the side wall 222 away from the bottom wall 221, and the protrusion 231 is spaced apart from or abuts against a surface of the side wall 222 forming the accommodating space. When the protrusion 231 is spaced apart from the surfaces of the side walls 222 forming the accommodating space, the spacing is not greater than 0.1 millimeter. The thickness L4 of the protrusion 231 is not greater than 0.5 millimeter, and the height L5 of the protrusion 231 is not greater than 0.5 millimeter. The protrusion 231 is formed with a first fillet α and a second fillet β, the first fillet α being an inner corner of the protrusion 231, the second fillet β being an outer corner of the protrusion 231, and a radius R1 of the first fillet α is not less than a difference between a radius R2 of the second fillet β and the thickness L4 of the protrusion 231. The top cover 23 is formed with a third fillet γ, and the radius R2 of the second fillet β is not less than a difference between a radius R3 of the third fillet γ and the shortest distance L3 from the protrusion 231 to the edge of the top cover 23.

By providing the protrusion 231 on the top cover 23, cooperation between the protrusion 231 and the housing 22 can block laser or falling particles during welding, and prevent laser or particles from entering the accommodating space and thus causing damage to the electrode assembly 21.

The above description is only embodiments of this application and does not limit the patent scope of this application. Any equivalent structural or procedural transformations made using the contents of the specification and drawings of this application, or directly or indirectly applied in other related technical fields, are equally included within the patent protection scope of this application.

## Claims

1. A battery cell comprising:
a housing, wherein the housing forms an accommodating space;
an electrode assembly, wherein the electrode assembly is disposed within the accommodating space; and
a top cover, wherein the top cover is connected to the housing and covers the accommodating space, the top cover is provided with a protrusion, the protrusion is located within the accommodating space, and the protrusion is configured to shield between the electrode assembly and at least a portion of the connection at which the top cover is connected to the housing.

2. The battery cell according to claim 1, wherein the housing comprises a bottom wall and side walls, the side walls extend from an edge of the bottom wall, the bottom wall and the side walls enclose the accommodating space, the top cover is connected to ends of the side walls away from the bottom wall, and the protrusion is spaced apart from or abuts against surfaces of the side walls forming the accommodating space.

3. The battery cell according to claim 2, wherein the protrusion is spaced apart from the surfaces of the side walls forming the accommodating space by a spacing not greater than 0.1 millimeter.

4. The battery cell according to claim 3, wherein a flange is provided on a side of the side wall away from the bottom wall, and the top cover is connected to the flange.

5. The battery cell according to claim 4, wherein a shortest distance from the protrusion to an edge of the top cover is not less than a sum of a width of the flange and a thickness of the side wall.

6. The battery cell according to claim 4, wherein the protrusion is formed with a first fillet and a second fillet, the first fillet being an inner corner of the protrusion, the second fillet being an outer corner of the protrusion, and a radius of the first fillet is not less than a difference between a radius of the second fillet and a thickness of the protrusion.

7. The battery cell according to claim 6, wherein the top cover is formed with a third fillet, and the radius of the second fillet is not less than a difference between a radius of the third fillet and the shortest distance from the protrusion to the edge of the top cover.

8. The battery cell according to claim 7, wherein the protrusion is perpendicular to the top cover.

9. The battery cell according to claim 8, wherein a tab is provided on one side of the electrode assembly, the tab faces one of the side walls, and the protrusion is spaced apart from or abuts against the surfaces of the side wall not faced by the tab and forming the accommodating space.

10. The battery cell according to claim 8, wherein the protrusion is a continuous structure, and a projection of the protrusion on the top cover surrounds a projection of the electrode assembly on the top cover.

11. The battery cell according to claim 10, wherein a cross-section of the protrusion in a direction perpendicular to the top cover is rectangular.

12. The battery cell according to claim 11, wherein the top cover is connected to the housing by welding, and the protrusion is configured to shield between the electrode assembly and at least a portion of a weld seam between the top cover and the housing.

13. The battery cell according to claim 12, wherein the protrusion is provided on a first surface of the top cover, a second surface of the top cover is planar, and the second surface and the first surface are surfaces of the top cover facing away from each other.

14. A battery, comprising the battery cell according to any one of claims 1 to 13.

15. An electric apparatus, comprising the battery according to claim 14, wherein the battery is configured to store and/or supply electricity for the electric apparatus.
